# EUROPEAN PATENT APPLICATION

(11) **EP 4 633 048 A1**
(43) Date of publication of application: **15.10.2025**
(21) Application number: 25169137.4
(22) Date of filing: 08.04.2025
(51) Int. Cl.: H04B 7/024, G06F 30/27, G06N 20/00, H04B 7/06, H04W 76/19, H04L 25/02

(54) **SYSTEM AND METHOD UTILIZING ARTIFICIAL INTELLIGENCE AND MACHINE LEARNING FOR BEAM FAILURE RECOVERY**

(30) Priority: 08.04.2024 US 202463631128 P; 04.04.2025 US 202519170781
(71) Applicant: Samsung Electronics Co., Ltd., Suwon-si, Gyeonggi-do 16677 (KR)
(72) Inventor: AWADIN, Mohamed Mokhtar Gaber Moursi, San Jose, CA, 95134 (US); CHENG, Yuan-Sheng, San Jose, CA, 95134 (US); SABER, Hamid, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

A system and a method are disclosed for performing BFR by a UE. The method includes detecting beam failure of a beam used by the UE in a serving cell including one or more TRPs; measuring one or more beams included a first candidate beam set; predicting a candidate beam from a second candidate beam set, based on the measurements of the one or more beams included the first candidate beam set; and performing BFR using the candidate beam

## Description

### TECHNICAL FIELD

The disclosure generally relates to beam failure recover (BFR). More particularly, the subject matter disclosed herein relates to improvements to BFR based on artificial intelligence (AI) and machine learning (ML).

### SUMMARY

BFR procedures generally rely on having at least two sets of reference signals (RSs) for assessing a quality of a currently used beam (or beams) and determining at least one potential candidate beam to replace the failed beam or beams. Additional sets of RSs may be configured when a base station, e.g., a gNB, is equipped with multiple transmission and reception points (TRPs).

When beam failure occurs, a user equipment (UE) may indicate a candidate beam out of the configured sets if the beam's measured quality is above a particular threshold. Otherwise, when no candidate beam within the configured candidate set(s) is above the threshold, the UE does not indicate an index of any candidate beam and merely indicates beam failure.

Additionally, configuring a large set of candidate beams may induce unnecessary overhead and power consumption as a UE should then monitor all of these RSs. Accordingly, procedures are needed to enhance candidate beam identification without increasing signaling overhead and power consumption.

For detecting beam failure, a UE should periodically monitor a single set, e.g., q0 for detecting beam failure, or q1 for identifying a candidate beam, if it exists, or multiple sets in case of multiple TRPs, e.g., (q0,0, q0,1) for detecting beam failure from separate TRPs or (q1,0, q1,1) for identifying a candidate beam for each TRP, if it exists, which may result in high power consumption and signaling overhead. Therefore, procedures are also needed to reduce such overhead.

Further, operating beams may change over time. Therefore, ensuring alignment between currently used beams and the set(s) of beams used for detecting beam failure is needed.

In new radio (NR), while sets for detecting beam failure can be updated by a medium access control (MAC)-control element (CE) or radio resource control (RRC), this may introduce additional latency. Therefore, procedures are also needed to reduce such latency.

To overcome these and other issues, systems and methods are described herein, which utilize AI/ML to perform BFR.

In accordance with an aspect of the disclosure, candidate beam prediction in BFR may include providing configurations of a set B and a set A for candidate beam prediction in case of a single TRP or multiple TRPs operation, wherein the same RS identifiers (IDs) are used as during a training phase, RSs for Sets A and B may be configured for inference phase and linked with RSs used during the training phase, and/or the same physical beam IDs used during the training phase may be used.

In accordance with another aspect of the disclosure, candidate beam prediction in BFR may include providing configurations to associated set A and set B for candidate beam identification in case of single TRP and multiple TRPs operation.

In accordance with another aspect of the disclosure, candidate beam prediction in BFR may include candidate beam identification based on both actual measurement of RSs and predicted measurement based on AI/ML.

In accordance with another aspect of the disclosure, candidate beam prediction in BFR may include associating a predicted candidate beam with contention free random access (CFRA) to be used when a beam is selected by a UE.

In accordance with another aspect of the disclosure, candidate beam prediction in BFR may include configuring a UE to indicate the best K candidate beams, instead of indicating a single predicted candidate beam.

In accordance with another aspect of the disclosure, candidate beam prediction in BFR may include configuring a UE to indicate, via capability signaling, whether or not it supports candidate beam identification using AI/ML procedure.

In accordance with another aspect of the disclosure, procedures are provided for using temporal beam prediction to reduce RS monitoring for beam failure detection (BFD) and candidate beam identification.

In accordance with another aspect of the disclosure, procedures are provided for jointly predicting beam failure and predicting candidate beams for single TRP or multiple TRP operation.

The above approaches improve on previous methods by reducing overhead associated with monitoring a large set of candidate beams by relying on AI/ML to measure fewer number of RSs and predict quality of remaining candidate beams without actually measuring them.

The above approaches also improve on previous methods by allowing future prediction of beam failure by using temporal AI/ML models, and allowing a UE to jointly predict beam failure and identify candidate beams.

In an embodiment, a method of performing BFR by a UE includes detecting beam failure of a beam used by the UE in a serving cell including one or more TRPs; measuring one or more beams included a first candidate beam set; predicting a candidate beam from a second candidate beam set, based on the measurements of the one or more beams included the first candidate beam set; and performing BFR using the candidate beam.

In an embodiment, a UE includes a transceiver; and a processor configured to detect beam failure of a beam used by the UE in a serving cell including one or more TRPs, measure one or more beams included a first candidate beam set, predict a candidate beam from a second candidate beam set, based on the measurements of the one or more beams included the first candidate beam set, and perform BFR using the candidate beam.

### BRIEF DESCRIPTION OF THE DRAWING

In the following section, the aspects of the subject matter disclosed herein will be described with reference to exemplary embodiments illustrated in the figures, in which:
FIG. 1 illustrates an example of an inference procedure for beam management (BM);
FIG. 2 illustrates an example of a gNB configuring a UE with 16 RSs as a candidate beam set B for measurement, according to an embodiment;
FIG. 3 illustrates a table including one-to-one mapping between a set A and a set B, according to an embodiment;
FIG. 4 illustrates a method of predicting candidate beams from set A based on a measurement of set B, according to an embodiment;
FIG. 5 illustrates a comparison of a measured set B to a predicted set A, according to an embodiment;
FIG. 6 illustrates a table having one-to-one mapping between set A and set B for each TRP, according to an embodiment;
FIG. 7 illustrates a method of applying temporal beam prediction to predict beam failure, according to an embodiment;
FIG. 8 illustrates a method of configuring a time pattern to indicate time instances of transmission or no transmission of BFD-RS, according to an embodiment;
FIG. 9 illustrates a method of determining which beams in set A can be used to declare beam failure, according to an embodiment;
FIG. 10 is a flowchart illustrating a method performed by a UE, according to an embodiment;
FIG. 11 is a block diagram of an electronic device in a network environment, according to an embodiment; and

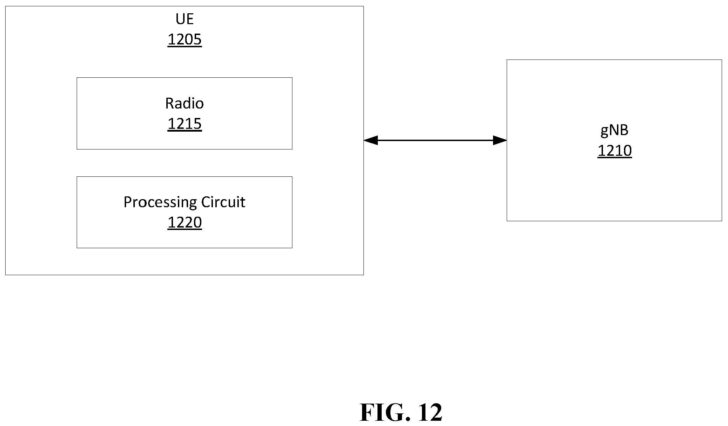

FIG. 12 shows a system including a UE and a gNB in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

In NR Release 15, a BFR procedure was introduced to recover a beam failure in a primary cell (PCell) and in NR Release 16, the BFR procedure was further extended to be applied in a secondary cell (SCell) as well. A BFR procedure generally includes the following steps:
1. BFD
2. Candidate beam identification
3. Beam failure recovery request (BFRQ)
4. Monitoring a gNB response after submission of a BFRQ

In step 1, BFD may be performed based on measurements of particular set of RSs to assess quality of serving beams based on a particular threshold.

More specifically, for both a special cell (SpCell) and an SCell, a gNB can explicitly configure a set of BFD-RSs that can be used for assessment of a quality of serving beams, denoted herein by *̅q̅*̅₀̅. If not configured, a UE assumes an RS quasi co-located (QCLed) with monitoring a physical downlink control channel (PDCCH) belongs to *̅q̅*̅₀̅. The UE does not expect to be configured with more than two RSs with an RRC parameter *purpose* set as *beamFailure* or both (radio link monitoring (RLM) and beam failure). For the SCell, the RRC parameter *purpose* can be set as *beamFailure* only.

The UE conducts measurements of those RSs and if the measured quality falls below a particular threshold, the UE's physical layer (PHY) reports a beam failure instance (BFI) to the UE's higher layer (e.g., MAC layer). The threshold used for assessment may correspond to a default value threshold used for RLM that is based on a hypothetical block error rate (BLER) (e.g., 10% BLER).

The BFI reporting from the UE's PHY to the UE's MAC can occur according to a particular periodicity. For non-discontinuous reception (DRX) mode, the periodicity may be the max (e.g., 2 msec, shortest periodicity of BFD-RSs).

To declare a beam failure, the UE's MAC should receive at least *beamFailureInstanceMaxCount* BFI reports from the UE's PHY within a time duration of *beamFailureDetectionTimer.* If the timer expires before the reported BFI reaches *beamFailureInstanceMaxCount,* the BFI counter is reset to 0. This may be beneficial to realize behavior where a reported BFI has to be contiguous though triggering beam failure by non-contiguous BFI reports is also supported.

The timer may be in units of BFI reporting periods from the UE's PHY to the UE's MAC. For example, if *beamFailureInstanceMaxCount* is set to 3 and *beamFailureDetectionTimer* is set to 3 BFI reporting periods, then the BFI reports should be contiguous to trigger BFRQ. If *beamFailureDetectionTimer* is set to more than 3 BFI reporting periods, then 3 non-contiguous BFIs can trigger BFRQ as well.

In step 2, candidate beam identification may be performed based on measurement of another set of RSs to identify a replacement beam to be used upon failure of a serving beam.

More specifically, the gNB can configure a candidate RS that may be used to recover the failed beam, herein denoted by *̅q̅*̅₁̅. For the SpCell, indices of candidate beam RSs can be associated with different preamble IDs and/or random access (RA) occasions that will used later to transmit a BFRQ. This association may be beneficial for the gNB to know which candidate beam is preferred by the UE. On the other hand, for the SCell, indexes of the candidate beam RSs may be associated with an SCell ID. This may be beneficial for the UE to indicate a preferred candidate beam from any other serving cell. To assess the quality of the candidate beam, the gNB can configure the UE with a reference signal received power (RSRP) threshold to determine if the beam can be report as a candidate beam or not.

In step 3, for a BFRQ, a UE may transmit an indicator to a gNB to inform it of a beam failure and to optionally indicate a candidate beam that can be used for recovery.

More specifically, for the SpCell, the UE transmits a contention free-physical random access channel (CF-PRACH) associated with a preferred candidate beam if any of the measured candidate beams quality is higher than the RSRP threshold. A contention based (CB) PRACH can be used as well, where a BFR MAC-CE can be included in Msg3 or MsgA of the 4-step random access channel (RACH) or 2-step RACH procedure, respectively.

For the SCell, the UE transmits a BFR MAC-CE indicating an index of a failed cell and an index of a preferred candidate beam, if any of the measured candidate beams quality is higher than the RSRP threshold. If there are no PUSCH resources to carry a MAC-CE, the UE can transmit a schedule request (SR) to request a resource. The configurations of the SR may be provided through a higher layer signaling parameter *schedulingRequestID-BFR-SCell.*

In step 4, a UE monitors a response from a gNB to decide whether a procedure is successfully completed or not.

More specifically, the UE starts monitoring response of the gNB to determine whether the procedure is successful or not. For the SpCell, when a CF PRACH is used, the UE starts monitoring the PDCCH scrambled with a cell-radio network temporary identifier (C-RNTI) or modulation and coding scheme (MCS)-C-RNTI in a configured search space (SS), through *recoverySearchSpaceld,* four slots after the slot including a PRACH transmission. The UE assumes that the gNB transmits the PDCCH using the indicated candidate beam. If the UE receives this PDCCH within *beamFailureRecoveryTimer* window, then recovery is successful and uses the identified beam for a subsequent transmission. When the UE uses a CB PRACH followed by a BFR MAC-CE transmission for a BFRQ, the UE monitors a PDCCH scrambled with an RA-RNTI. On the other hand, for the SCell, if the UE receives downlink control information (DCI) scheduling a PUSCH with the same hybrid automatic repeat request (HARQ) process number used for a BFR MAC-CE transmission and a new data indication (NDI) toggled, the UE assumes BFR on the SCell is successful and uses the new identified beam for reception on the SCell.

BFR for an SpCell and an SCell is further enhanced in Release 17/18 to support multiple TRPs operating on the SpCell and the SCell. Instead of having a single set for detecting beam failure, *q̅*₀, two sets of RSs are used to detect beam failure at each TRP, herein denoted as *q̅*_{0,0} and *q̅*_{0,1}.

Similar to *q̅*₀, *q̅*_{0,0} and *q̅*_{0,1} can be explicitly configured by RRC parameters, failureDetectionSet1 and failureDetectionSet2, respectively. Alternatively, *q̅*_{0,0} and *q̅*_{0,1} can be determined based on transmission configuration indication (TCI) states of control resource sets (CORESETs) associated with each TRP. That is, a coresetPoolIndex divides CORESETs into two groups corresponding to each TRP. Thereafter, the TCI for each group may be used to derive, *q̅*_{0,0} and *q̅*_{0,1}.

A size of *q̅*_{0,0} and *q̅*_{0,1} may be determined based on UE capability signaling. For implicit determination of *q̅*_{0,0} and *q̅*_{0,1}, and when there are more CORESETs than what is already indicated by the UE capability, the specifications provide rules on which CORESETs are to be used to determine *q̅*_{0,0} and *q̅*_{0,1}. A rule is based on an ascending order for PDCCH monitoring periodicity. If more than one first or second CORESETs correspond to search space sets with the same monitoring periodicity, the UE determines the order of the first or second CORESETs according to a descending order of a CORESET index. This differs from the implicit determination of *q̅*₀ , which is left to UE implementation.

An additional feature of *q̅*_{0,0} and *q̅*_{0,1} is that their RSs may be determined by a MAC-CE, compared with only RRC for *q̅*₀. This may be beneficial to quickly align *q̅*_{0,0} and *q̅*_{0,1} with the beams used for downlink (DL) transmissions instead of relying on RRC reconfigurations.

Similar to *q̅*₁, *q̅*_{1,0} and *q̅*_{1,1} can be configured by RRC parameters to provide the UE with candidate beam lists for each TRP. When a beam failure is detected from a particular TRP, the UE may indicate a candidate beam from the set corresponding to this TRP. The RRC parameters *candidateBeamRS-List* and *candidateBeamRS-List2* may be used to provide *q̅*_{1,0} and *q̅*_{1,1}, respectively.

The UE's physical layer may provide a higher layer with an indication of BFIs, similar to single TRP operation. An exception here, however, is that a separate counter is used to count beam failures for each TRP separately.

For transmitting a BFRQ, a MAC-CE is used, similar to an SCell operation, regardless whether beam failure is associated with an SpCell or an SCell. In other words, a CF RACH is used for an SpCell in a single TRP operation when a good candidate beam is identified with RSRP measurements above a particular threshold.

Similar to an SCell with a single TRP, a MAC-CE carrying a BFRQ may include the following information:
- Index of a failed cell.
- Index of a failed TRP, e.g., a one bit field. If set to 0, the index refers to failureDetectionSet1, and if set to 1, then the index refers to failureDetectionSet2.
- Index of a candidate beam from the associated candidate beam set, if any.

Similar to an SCell with a single TRP, the gNB can provide the UE with a single SR to request a PUSCH to transmit a MAC-CE carrying the BFRQ for either TRP. Additionally, subject to UE capability, the gNB can provide the UE with two SRs separately linked to each TRP. When a failure is detect at particular TRP, the UE uses the associated SR.

Table 1 and Table 2 summarize the which beams should be used for receiving/transmitting different channels/RSs after transmission of a BFRQ using a CF RACH, a CB RACH, or a MAC-CE.

**Table 1 - CF RACH or MAC-CE is used to carry a BFRQ**

| | Monitoring in recoverySearchSpace | channels other than recoverySearchSpace after some delay provided in the specs | |
|---|---|---|---|
| BFR on a PCell (single TRP with R15 TCI framework) | UE applies q_{new} until receiving another MAC-CE or RRC to change the TCI associated with the recovery search space | | • No specifications for PDCCH or other DL channels. |
| | | | • PUCCH transmission: applies q_{new} until receiving new beam indication for PUCCH by MAC-CE or RRC |
| BFR on a SCell (single TRP with R15 TCI framework) | Not applicable | | • All PDCCHs in Scell are monitored based on q_{new} |
| | | | • PUCCH transmission on Scell: applies q_{new} |
| BFR on a PCell (single TRP with R17 unified TCI framework or R18 unified TCI framework where the UE is configured q₀ and q₁, NOT {q_{0,0}, q_{1,0}} and {q_{1,0}, q_{1,1} }) | UE applies q_{new} until receiving another MAC-CE or RRC to change the TCI associated with the recovery search space | | • All CORESETs, PDSCH AP-CSI-RS with the same TCI as PDCCH/PDSCH are monitored using q_{new} |
| | | | • PUCCH, PUSCH, and SRS that with the same TCI as PUCCH/PUSCH: uses the same beam as PRACH (which is supposed to be q_{new}) |
| BFR on a SCell (single TRP with R17 unified TCI framework) | Not applicable | | • All CORESETs, AP-CSI-RS with the same TCI as PDCCH, and PDSCH are monitored using q_{new} |
| | | | • PUCCH, PUSCH, and SRS that with the same TCI as PUCCH/PUSCH: uses q_{new} |
| BFD on a cell (PCell or SCell) with multiple TRPs with R16 TCI framework | Not applicable | | • All CORESETs of the first TRP (CORESETpoolindx 0): applies q_{new} from q_{1,0} |
| | | | • All CORESETs of the second TRP (CORESETpoolindx 1): applies q_{new} from q_{1,1} |
| BFD on a cell (PCell or SCell) with multiple TRPs with R18 unified TCI framework based on S-DCI M-TRP | Not applicable | | • For the first TCI state, all CORESETs associated with this TCI state, AP-CSI-RS using this TCI state are monitored using q_{new} from q_{1,0} |
| "For a serving cell associated with sets *q̅*_{0,0} and *q̅*_{1,0}, and with sets *q̅*_{0,1} and *q̅*_{1,1}, and having radio link quality worse than Q_{out,LR}, and if a UE is provided *dl-OrJointTCI-StateList* or *TCI-UL-State* and is indicated a **first** *TCI-State* or *TCI-UL-State* and a **second** *TCI-State* or *TCI-UL-State*," | | | |
| | | | • For the second TCI state, all CORESETs associated with this TCI state, AP-CSI-RS using this TCI state are monitored using q_{new} from q_{1,1} |
| | | | • For the first TRP, PUCCH, PUSCH, and SRS that with a TCI of this TRP are transmitted using q_{new} from q_{1,0} |
| | | | • For the second TRP, PUCCH, PUSCH, and SRS that with a TCI of this TRP are transmitted using q_{new} from q_{1,1} |
| BFD on a cell (PCell or SCell) with multiple TRPs with R18 unified TCI framework based on M-DCI M-TRP | Not applicable | Same as the previous row, but everything is relevant to the CORESETpoolindex instead | |
| "For a serving cell associated with sets *q̅*_{0,0} and *q̅*_{1,0}, and with sets *q̅*_{0,1} and *q̅*_{1,1}, and having radio link quality worse than Q_{out,LR}, and if a UE is provided two ***coresetPoolIndex*** values 0 and 1 for the first and second CORESETs, or is not provided *coresetPoolIndex* value for the first CORESETs and is provided *coresetPoolIndex* value of 1 for the second CORESETs, respectively, and the UE is provided *dl-OrJointTCI-StateList* or *TCI-UL-State"* | | | |

**Table 2 - CB RACH is used to carry a BFRQ**

| | Monitoring in recoverySearchSpace | channels other than recoverySearchSpace after some delay provided in the specs | |
|---|---|---|---|
| BFR on a PCell (single TRP with R15 TCI framework) | Not applicable | | • No specifications for PDCCH or other DL channels. |
| | | | • PUCCH transmission: applies the same beam as the one used for PRACH |
| BFR on a PCell (R17unifired TCI state framework or 18 unified TCI framework where the UE is configured q₀ and q₁, NOT {q_{0,0}, q_{1,0}} and {q_{1,0}, q_{1,1}}) | Not applicable | | • All CORESETs, PDSCH and AP-CSI-RS with the same TCI as PDCCH/PDSCH, and PDSCH are monitored using q_{new} |
| | | | • PUCCH, PUSCH, and SRS that with the same TCI as PUCCH/PUSCH: uses q_{new} |

In an NR Release 18 AI/ML study item, BM is a selected use case for evaluation of AI/ML on a physical air interface.

For BM, two sub-use cases, i.e., BM-Case 1 and BM-Case 2, are selected as representative sub-use cases, and the definitions of these two cases are as below:
- BM-Case 1: Spatial-domain DL beam prediction for set A of beams based on measurement results of set B of beams
   - Consider: Alt. 1): AI/ML model training and inference at network (NW) side. Alt. 2): AI/ML model training and inference at UE side.
   - Consider: Alt. i): Set A and set B are different (set B is NOT a subset of set A). Alt. ii): Set B is a subset of set A. Note: Set A is for DL beam prediction and set B is for DL beam measurement.
   - AI/ML model input: Alt 1): Only layer 1 (L1)-RSRP measurement based on Set B; Alt.2): L1-RSRP measurement based on set B and assistance information; Alt. 3): Channel impulse response (CIR) based on set B; Alt. 4): L1-RSRP measurement based on set B and the corresponding DL transmission and/or reception beam ID.
- BM-Case 2: Temporal DL beam prediction for set A of beams based on historic measurement results of set B of beams
   - Consider: Alt. 1): AI/ML model training and inference at NW side. Alt. 2): AI/ML model training and inference at UE side.
   - Consider: Alt. i): Set A and set B are different (Set B is NOT a subset of set A). Alt. ii): Set B is a subset of set A (Set A and set B are not the same). Alt. iii): Set A and set B are the same.
   - AI/ML model input: measurement results of K (K≥1) latest measurement instances with the following alternatives: Alt. 1): Only L1-RSRP measurement based on set B; Alt 2): L1-RSRP measurement based on set B and assistance information; Alt. 3): L1-RSRP measurement based on set B and the corresponding DL transmission and/or reception beam ID.
   - [AI/ML model output]: F predictions for F future time instances, where each prediction is for each time instance. At least F=1.

As common terminologies, set A is set of beams predicted for an AI/ML model. The set B is a set of beams whose measurements are taken as inputs of the AI/ML model. Set B can be a subset of set A or a different set of beams. For example, set B may include wider beams associated with different synchronization signal blocks (SSBs), and set A may include finer beams associated with different CSI-RSs based on hierarchy.

Overall, BM-Case 1 is for spatial domain DL beam prediction and BM-Case 2 is for temporal domain DL beam prediction. However, BM-Case 2 can also be a combination of temporal and spatial domain prediction, if set B is not equal to set A. An AI/ML model for BM considered in the Rel-18 study item is based on a one sided model, either on a gNB side or a UE side.

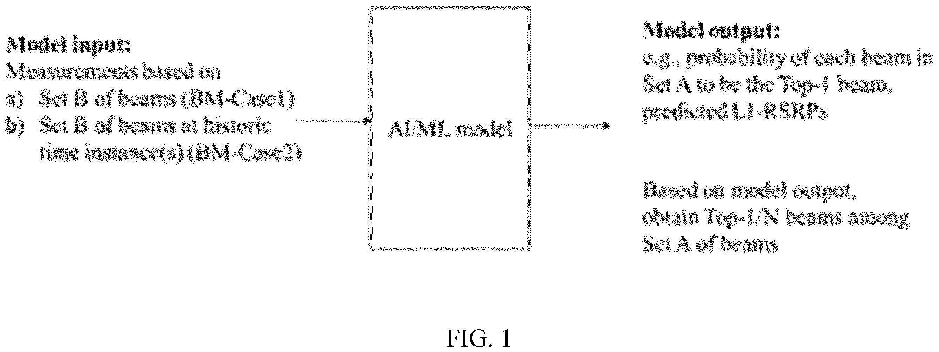

FIG. 1 illustrates an example of an inference procedure for BM. More specifically, FIG. 1 illustrates an inference procedure for BM-Case 1 and BM-Case 2.

Referring to FIG. 1, measurements based on set B of beams are used as AI/ML model input. In addition, beam ID information may be provided as input to the AI/ML model. Based on the AI/ML model output (e.g., probability of each beam in set A to be the Top-1 beam, predicted L1-RSRPs), the top-1/N beam(s) among the set A of beams can be predicted and/or potentially with predicted L1-RSRPs.

In the evaluation, for BM-Case 1, the measurements of set B (otherwise stated) are used as the AI/ML model input to predict the top-1/N beams from set A, and for BM-Case 2, the measurements from historic time instance(s) are used as the AI/ML model input for temporal DL beam prediction of beams from set A.

In the evaluation, cases in which set A and set B are different (i.e., set B is NOT a subset of set A), and in which set B is a subset of set A for both BM-Case 1 and BM-Case 2, and a case in which set A and set B are the same for BM-Case 2 are considered. The performance of a DL transmission beam prediction and a DL transmission-reception beam pair prediction is evaluated.

For both BM-Case 1 and BM-Case 2, a UE can report the prediction result to a network based on the output of a UE-side model, or the network can predict the top-1/N beam(s) based on the reported measurements of set B for a network-side model.

In NR, when a UE detects a beam failure in a serving cell equipped with single or multiple TRPs, if the UE identifies a good candidate beam from a configured candidate beam set, e.g., provided by *candidateBeamRSList, candidateBeamRSListExt, candidateBeamRSSCellList, candidateBeamRS-List,* or *candidateBeamRS-List2,* the UE may utilize the candidate beam in a recovery process. For example, in a PCell, the UE may use a dedicated PRACH associated with an identified candidate beam to transmit a BFRQ to a gNB. In a SCell, the UE may indicate an RS index associated with an identified candidate beam.

If no candidate beam is identified within a configured set(s), in a PCell, a UE may transmit a CB RACH. For an SCell, the UE may indicate the beam failure without indicating any candidate beam.

Although a size of a candidate beam set can be {16, 48, 64}, e.g., *candidateBeamRSList* can have up to 16 beams, *candidateBeamRSListExt* can have up to 48 beams, and *candidateBeamRS-List* or *candidateBeamRS-List2* can have up to 64 beams, configuring such large number of candidate beams may result in high signaling overhead and power consumption at a UE. Accordingly, an aspect of the present disclosure is to address this issue.

For identifying a candidate beam, a UE may deploy AI/ML BM techniques to measure fewer number of candidate beams, e.g., less RSs associated with those candidate beams, which may be set B, e.g., and predict candidate beams from a larger set, e.g., set A.

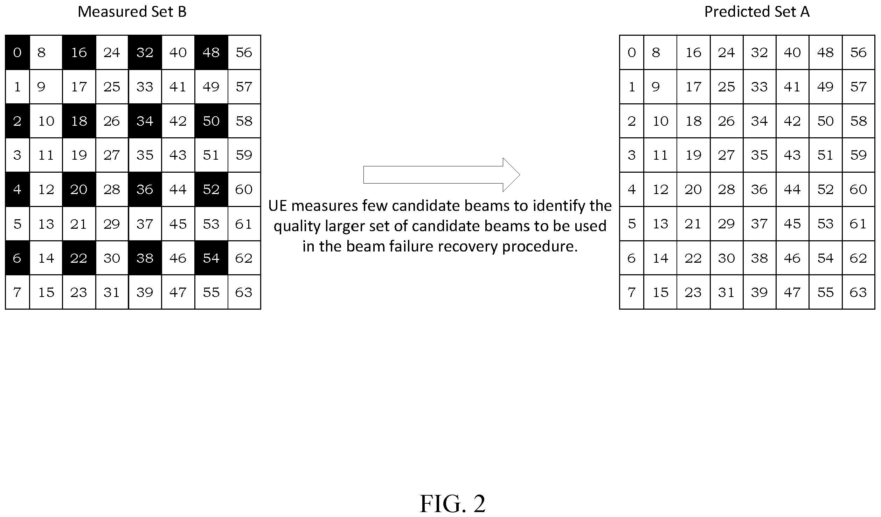

FIG. 2 illustrates an example of a gNB configuring a UE with 16 RSs as a candidate beam set B for measurement, according to an embodiment.

Referring to FIG. 2, a UE does not measure all of the candidate beams in set A, only the 16 black squares beams which are denoted as set B. The UE may then use these measurements to predict the quality of a larger set of candidate beams in set A, which comprises 64 beams. When the UE detects beam failure, it may use any of the predicted candidate beams from Set A, not only the measured ones in set B.

A gNB may provide a UE with a list candidate beams set B for measurement, e.g., via higher layer signaling. Alternatively, a UE may re-interpret configurations of a legacy candidate beam, e.g., *candidateBeamRSList, candidateBeamRSListExt* or *candidateBeamRSSCellList,* as a list of the candidate beams in set B for measurement.

The UE may expect that RS IDs provided in a list of the candidate beams in set B are the same as those used during a training phase. This may be beneficial as the UE can then map the measured RS IDs in the list of the candidate beams in set B to those used during the training phase.

To provide the gNB with more flexibility, RS IDs provided in a list of candidate beams in set B to be used in the inference phase may differ from those used during a training phase. In this case, association between RS IDs provided in a list of candidate beams in set B and RS IDs used during the training phase may be needed. The UE may expect the same transmission beams to be used for any associated pairs of RSs. The UE may expect that any associated pairs of RSs share common beam properties such as the same spatial domain filter, same 3dB beam width, angle departure, and/or angle of arrival, the same coverage area, or the same boresight direction. For example, the UE may assume that they (i.e., any associated pairs of RSs) have the same quasi col-location (QCL) type A, B, C, or D.

Association between RS IDs provided in a list of candidate beams in set B to be used in the inference phase and those used during the training phase may be based on various rules. For example, a rule may be in an ascending order of indices. Specifically, RS #i and RS #i+1 in a list of candidate beams in set B to be used in the inference phase are associated with RS #j and RS #j+1, of the RSs in set B used during the training phase, respectively. The UE may expect the list of the candidate beams set B and those used during the training phase to have the same cardinality, i.e., the same size. If their sizes are different, e.g., the size of the configured candidate beams in set B to be used in the inference phase has less RSs than used during the training phase, then the association may still be based on the rule of ascending order of RS IDs, until all of the RSs in the list of the candidate beams in set B to be used in the inference phase is associated with one of the RSs used in the training phase.

RS IDs provided in a list of candidate beams in set B can directly associated with physical beam IDs used during the training phase, rather than using RS IDs used during the training. The type of association rule may be similar to the aforementioned ones.

Additionally, a gNB may provide a UE with candidate beams in set A that are associated with configured candidate beams in set B. For example, in a training phase, the UE is trained on multiple pairs of set A and set B. For an inference phase, the gNB may provide the UE with a pairs index through higher layer signaling.

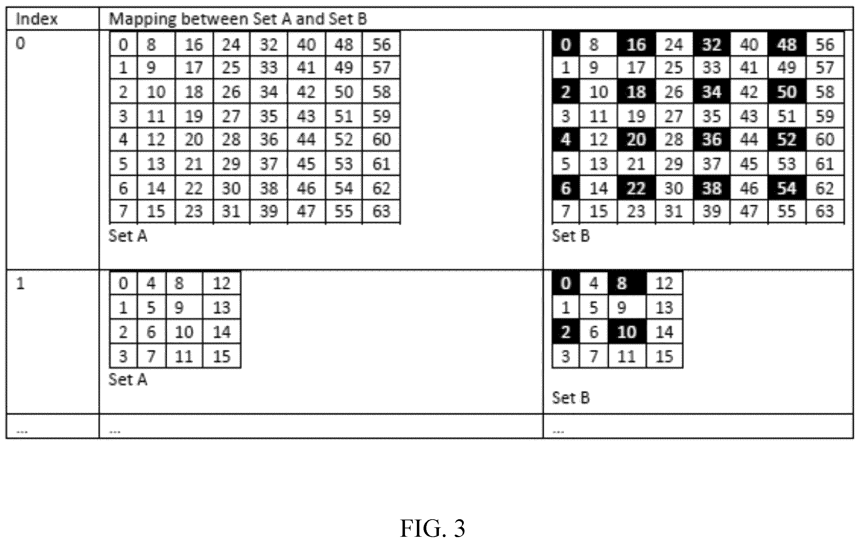

FIG. 3 illustrates a table including one-to-one mapping between a set A and a set B, according to an embodiment.

Referring to FIG. 3, beam indices with black fill-in are used as set B. Each row in the table is associated with an index (i.e., 0 or 1), which a gNB can indicate via higher layer singling. This index may be referred as the associated ID used in an AI/ML procedure for BM.

According to another embodiment, a gNB may provide a UE with a list of RS IDs corresponding to set A used during training. For example, the gNB may provide the UE, via higher layer signaling, a set of RS IDs, e.g., *NZP-CSI-RS-ResourceSet*, *CSI-SSB-ResourceSet* etc. The UE may then expect that the RS IDs provided in the list of candidate beams in set A to be used during the inference phase are the same as those used during the training phase. This may be beneficial as the UE can map the measured RS IDs in the list of the candidate beams in set A to those used during the training phase.

To provide a gNB with more flexibility, RS IDs provided in a list of candidate beams in set A to be used during the inference phase may differ from those used during a training phase. An association between RS IDs provided in a list of candidate beams in set A to be used during the inference phase and those used during the training phase may be provided. For example, a UE may expect the same transmission beams to be used for any associated pairs of RSs. The UE may expect that the associated pairs of RSs share common beam properties such as the same spatial domain filter, same 3dB beam width, angle departure, and/or angle of arrival, the same coverage area, or the same boresight direction. For example, the UE may assume that they (i.e., associated pairs of RSs) have the same QCL type A, B, C, or D.

An association between RS IDs provided in a list of candidate beams in set A to be used during the inference phase and those used during a training phase may be based on various rules. For example, a rule may be an ascending order of indices. Specifically, RS #i and RS #i+1 in the list of the candidate beams in set A to be used during the inference phase are associated with RS #j and RS #j+1, of the RSs in the set A used during the training phase, respectively. The UE may expect the list of the candidate beams in set A to be used during the inference phase and those used during the training phase to have the same cardinality, i.e., the same size. However, even if their sizes are different, e.g., the size of the configured candidate beams in set A to be used during the inference phase has fewer RSs than those used during the training phase, then the association may still be based on an ascending order of RS IDs, until all of the RSs in the list of the candidate beams in set A to be used during the inference phase are associated with one of the RSs used in the training phase.

RS IDs provided in a list of candidate beams in set A to be used during the inference phase can be directly associated with physical beam IDs used during the training phase, rather than using RS IDs used during the training. The association rule may similar to the aforementioned ones.

According to another embodiment, RS IDs for candidate beams in set A may not be configured. That is, a gNB may just provide a UE with RSs IDs of set B and indicate the associated set A. For identifying candidate beam IDs, the UE may use either the RS IDs of set A used during the training phase or the physical beam IDs that may be known for both the UE and the gNB during the training phase.

In some situations, a gNB may want to ensure that particular candidate beams are examined and not fully rely on the output of the AI/ML model. For example, if a gNB has a prior knowledge that candidate beams will most likely be from a set of beams, the gNB may want to rely on explicit measurement of such set, rather than the output of the AI/ML model. At the same time, the gNB may still want to use the AI/ML model to predict the candidate beams in case the explicitly configured set is insufficient. To this end, the gNB may provide the UE with:
- A set of RSs configurations of legacy candidate beams, e.g., *candidateBeamRSList* , *candidateBeamRSListExt,* or *candidateBeamRSSCellList*
- Another set of RSs to be treated as a candidate beams in set B to be used as input for the AI/ML model
- Another set of RSs to be treated as candidate beams in set A

Although FIG. 3 illustrates set B as a subset of set A, the disclosure is not limited thereto. For example, set B may include wide beams, while set A can be a narrow beams.

The aforementioned procedures for configuring set B and set A may be applied regardless whether or not set B is a subset of set A. However, when set B is a subset of set A, a bitmap may be used to indicate RSs that are used as set B from those configured for set A.

In NR, for a configured candidate beam, a gNB may configure dedicated RACH resources (e.g., RA occasion (RO) index, preamble index, or both) that a UE shall use upon selecting the candidate beam.

When using AI/ML for predicting candidate beams from a set A whose RS IDs are explicitly provided, the gNB may configure the UE with dedicated RACH resources for each of the RS IDs explicitly configured for set A.

However, when RS IDs for set A are not explicitly provided, i.e., the UE may use RS IDs of set A or physical beam IDs that can be determined during a training phase, various approaches may be used to determine associated RACH resources.

As one possibility, for each candidate beam in set A identified by an RS ID or a physical beam ID during the training phase, a gNB may provide a UE with RACH resources associated with each identified candidate beam in set A.

For example, the configurations in Table 3 and 4 may be used, where *ssb* and *csi-RS* are replaced with RS IDs used during a training phase. In Table 3 and 4, the lined out legacy information may be removed or may be kept as an optional parameter, and the *bold **and italicized information*** is newly added.

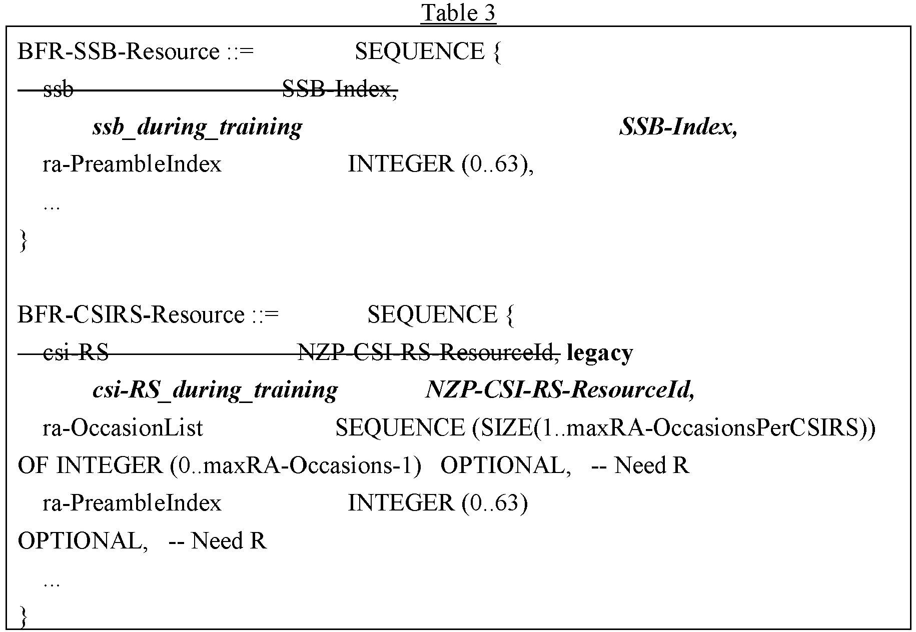

In case of using physical beam IDs to identify candidate beams in set A, the following configurations may be used.

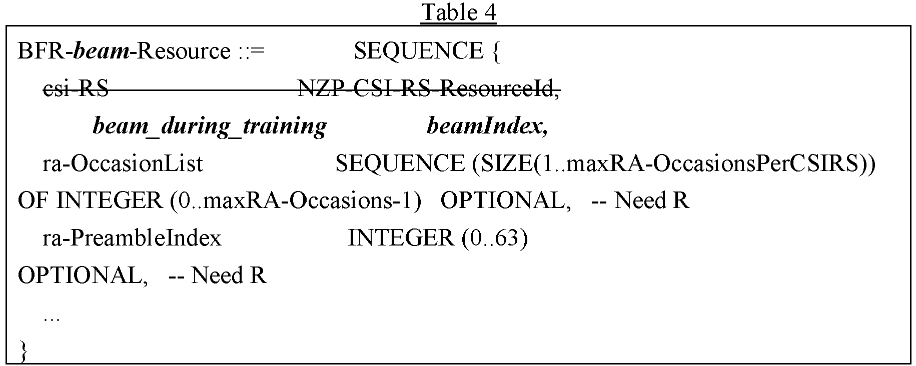

In Tables 3 and 4, *SSB-Index*, *NZP-CSI-RS-ResourceId*, or *beamIndex* is one of the identified beams during the training phase.

The size of candidate beams in set A, provided either explicitly or implicitly, may be relatively large, and therefore, allocating dedicated RACH resources for each candidate beam may result in additional overhead. One possibility is to allow grouping of multiple candidate beams to be associated with the same RACH resources. The gNB may provide the UE with a list of candidate beams in set A associated with a RACH resource.

In the following configurations example in Table 5, a list of candidate beams in set A is associated with the same RACH resource. If a UE identifies any candidate beam from this list, the UE shall use the same RACH resource. Similar to Table 3 and 4, in Table 5, the lined out legacy information may be removed or may be kept as an optional parameter, and the ***bold and italicized information*** is newly added.

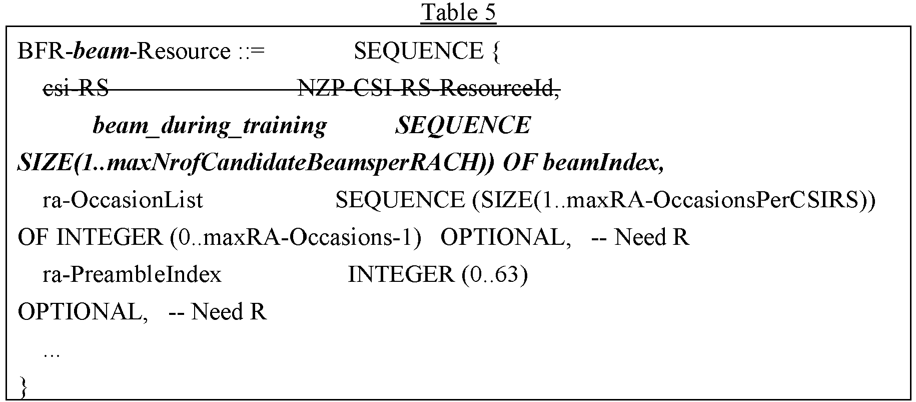

According to an embodiment, when candidate beams are determined based on explicit measurements of a configured set of candidate beams, e.g., using legacy configuration, and based on an AI/ML model output, a gNB may provide a UE with RACH resources associated with the explicitly configured candidate beams and predicted candidate beams based on set A and set B. When candidate beams are determined similar to legacy, CFRA resources can be configured similar to legacy configurations. When candidate beams are determined based on AI/ML, the aforementioned procedures may be used to provide associated RACH resources.

If candidate beams in set A include beams provided in an explicit candidate beams set, e.g., based on legacy configurations, it may happen that one of the best k predicted beams is also one of the measured beams in the explicit candidate beams set. For such a candidate beam, the UE may rely on the measured RS associated with it, rather than the predicted values that may be less accurate. However, in some situations, predicted candidate beams from set A may be more accurate than an explicit candidate beam set. For example, when beam failure occurs, a measured set B is more recent than a measured explicit candidate beam set. Therefore, in this case, it may be beneficial for the UE to use predicted values of the candidate beam. This may be subject to UE capability to determine which one to use.

Additionally, to identify candidate beams from an explicit measurement of the candidate beam set or based on output of an AI/ML model, different threshold values may be applied. For example, a gNB may provide a UE with two different thresholds L1-RSRP to consider if an identified beam is good enough.

For transmitting a PRACH upon detecting the beam failure, a UE may use QCL parameters associated with an identified candidate beam from set A to transmit the PRACH, if it is used to identify the candidate beam. Otherwise, if an explicit candidate set is configured, the UE may use QCL parameters associated with the identified candidate beam from the explicit candidate set.

Similar to legacy NR, a UE may monitor a gNB's response in a PDCCH in a dedicated search space, e.g., *recoverySearchSpaceld,* with the same QCL parameters as the identified candidate beam from set A.

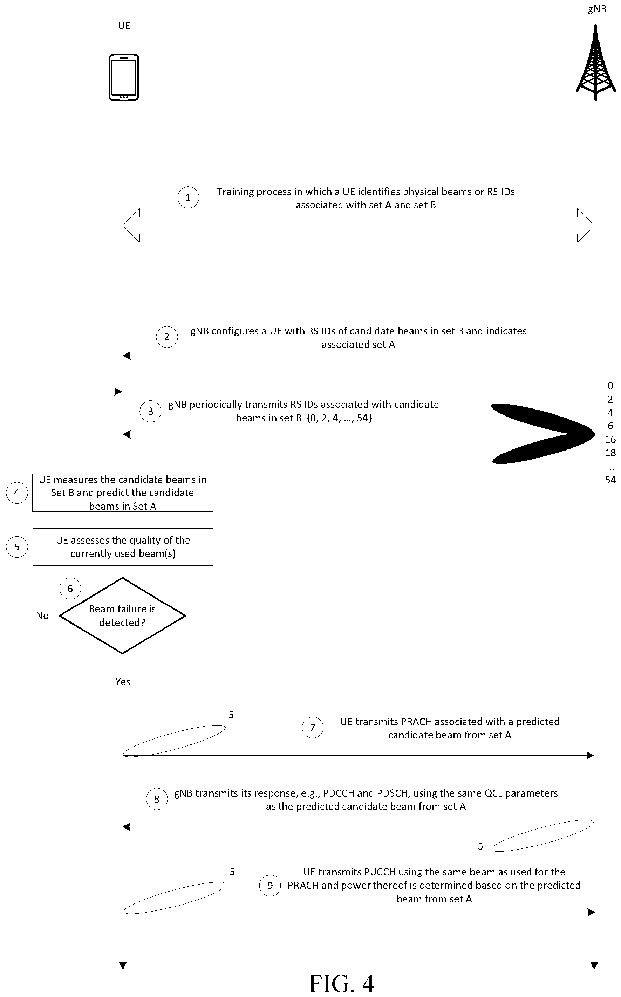

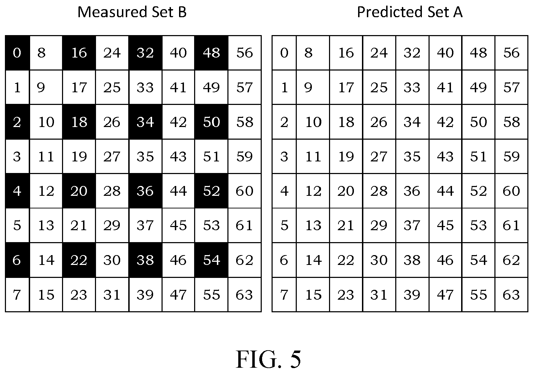

FIG. 4 illustrates a method of predicting candidate beams from set A based on a measurement of set B, according to an embodiment, and FIG. 5 illustrates a comparison of a measured set B to a predicted set A, according to an embodiment.

Referring to FIG. 4, in step 1, a training process is performed between a UE and a gNB, in which the UE identifies physical beams or RS IDs associated with set A and set B.

In step 2, the gNB configures the UE with RS IDs of candidate beams in set B and indicates an associated set A, either explicitly or implicitly.

In step 3, the gNB periodically transmits RS IDs associated with candidate beams in set B {0, 2, 4, ..., 54}. For example, these candidate beams in set B are shown with black fill-in in FIG. 5.

In step 4, the UE measures the candidate beams in set B and predicts candidate beams in set A.

In step 5, the UE assesses the quality of the currently used beam(s), e.g., compares the quality of the currently used beam(s) to a predetermined threshold.

In step 6, the UE determines if beam failure is detected.

If beam failure is not detected, the procedure returns to step 3. However, if beam failure is detected, the UE transmits a PRACH associated with a predicted candidate beam from set A, which may not necessarily be measured in set B, in step 7.

In step 8, the gNB transmits its response, e.g., a PDCCH and PDSCH, using the same QCL parameters as the predicted candidate beam from set A.

In step 9, the UE transmits a PUCCH using the same beam as the one used for PRACH, i.e., beam 5, and the power thereof is determined based on the predicted beam from set A.

Prediction of an AI/ML model is more accurate when it produce K-best beams rather than only a single beam. That is, the likelihood that that the best candidate beam is obtained by AI/ML model producing the top-1 beam is less than the best candidate beam being obtained by the AI/ML model producing the top-K beams. To this end, according to an embodiment, a UE may transmit multiple PRACHs associated the top-K predicted candidate beams.

To monitor a gNB response within a monitoring window, assuming the gNB transmits a response, e.g., a PDCCH or a PDSCH, using the same QCL parameters as the predicted candidate beams from Set A, various methods may be performed.

According to one embodiment, a monitoring window may be divided into k portions associated with k-best selected beams. In this approach, the UE may determine the best k candidate beams, and then transmit CFRA associated with each identified candidate beams. Thereafter, the UE may start the monitoring window for all selected candidate beams.

Alternatively, rather than dividing the monitoring window into k portions, the UE may use k consecutive monitoring windows for an identified candidate beam. The length of each window may be equal to a legacy monitoring window or separately configured.

According to one embodiment, a monitoring window may start after a transmission of each CFRA based on a legacy timeline. In other words, k parallel beam failure procedures may run concurrently. Therefore, monitoring windows associated with different candidate beams may overlap in the time domain. Accordingly, new rules may be used to determine which beam should be used to monitor a gNB response. For example, in an overlapped portion, a UE may apply QCL assumptions associated with a candidate beam whose CFRA is transmitted earlier/later.

To determine the value of "k", a gNB may provide it to the UE, e.g., via higher layer signaling based on the indicated capability. For example, if the UE supports providing 10 best candidate beams, the gNB may configure less than 10. Upon an absence of a configuration of "k" value, a top-1 beam may be applied.

The UE may continue to use a candidate beam identified in set A until receiving a new configurations or activation command activating a new beam.

If the UE is configured with unified TCI framework, e.g., provided *dl-OrJointTCI-StateList* or *ul-TCI-StateList*, the QCL parameters of the candidate beam identified in set A may be used for monitoring a PDCCH in all CORESETs, and receiving a PDSCH and an aperiodic CSI-RS resource in a CSI-RS resource set with same indicated TCI state as for the PDCCH and PDSCH. Similarly, the UE may use the candidate beam identified in set A to determine a DL pathloss estimate. In order to estimate pathloss, information about a transmit power of set A should be provided by the gNB.

For an SCell, in NR, a gNB may provide a UE with a list of candidate beams via *candidateBeamRS-List.* When beam failure occurs, the UE may indicate a candidate RS index out of the configured list of candidate beams.

When using AI/ML BM techniques to predict candidate beams, the UE may need to be aware of candidate beam set A using the aforementioned procedures. For example, for configuring set A based on using the same RS IDs as used during a training phase, the information element (IE) in Table 6 can be re-interrupted as RS IDs of set A.

Alternatively, when the provided RS IDs for set A differ from those used during training, the aforementioned association rules may be applied to establish a link between the provided RS IDs to be used in the inference phase and those used during the training.

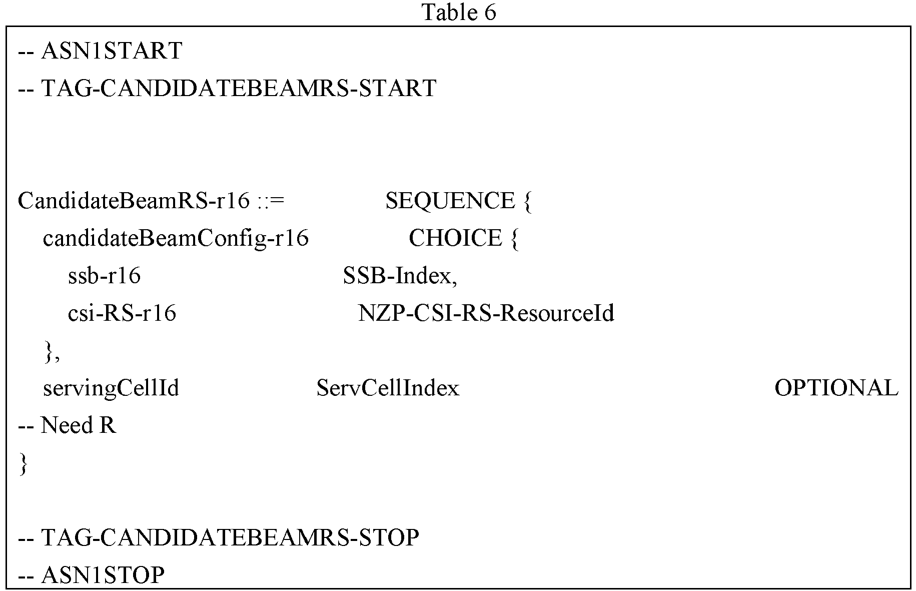

When RS IDs for candidate beam set A may not be configured, a UE may rely on an indicated set B and a linked set A. In this case, the UE may either use the RS IDs of set A used during the training phase or physical beam IDs that may be known for both the UE and gNB during the training phase.

Similar NR, when beam failure occurs, a UE may transmit a MAC-CE indicating a preferred candidate beam, if it exists.
- If set A is explicitly configured, e.g., using the same or different RS IDs as used in training, a MAC-CE may include a configured RS ID of a preferred candidate beam, if its predicted RSRP satisfies a configured threshold.
- If set A is implicitly configured, e.g., by indicating set B and a linked set A, a MAC-CE may include an RS ID used during a training phase or physical beam IDs of a preferred candidate beam, if its predicted RSRP satisfies a configured threshold.

When candidate beams are determined based on explicit measurements of a configured set of candidate beams, e.g., using legacy configurations, and based on AI/ML model output, separate MAC-CEs may be used to carry an identified candidate based on the explicit measurement and AI/ML model output. Also, a single MAC-CE may be used to carry an index of a best identified beam across predicted candidate beams and measured candidate beams.

Similar to operations in a PCell, if candidate beam set A includes some beams that are also provided in an explicit candidate beams set, e.g., based on legacy configurations, it is possible that one of the best k predicted beams is also one of the measured beams in the explicit candidate beams set. For such a candidate beam, a UE may rely on a measured RS associated with the beam, rather than the predicted values, which may be less accurate. However, the predicted candidate beams from set A may be more accurate than the explicit candidate beam set in some situation. For example, if beam failure occur, the measured set B is more recent than the measured explicit candidate beams set. Accordingly, in this case, it may be beneficial for the UE to use the predicted values of the candidate beam. This may be subject to UE capability to determine which measurements to use.

Additionally, similar to the operation in a PCell, for identifying candidate beams from the explicit measurement of the candidate beams set or based on an output of an AI/ML model, different threshold values may be applied. For example, a gNB may provide a UE with two different thresholds L1-RSRP for consideration of whether or not identified beam is good enough.

The prediction of an AI/ML model is generally more accurate when it produce K-best beams rather than only a single beam. That is, the likelihood that that a best candidate beam is obtained by an AI/ML model producing a top-1 beam is less than the best candidate beam being obtained by the AI/ML model producing the top-K beams. To this end, a UE may transmit indices associated with the top-K predicted candidate beams. That is, a MAC-CE, in instead of carrying information for a single candidate beam, may carry information about the best K predicated candidate beams. The MAC-CE may carry the corresponding indices and indicate whether they are present. For example, if K candidate beams are configured to be predicted, but the UE can only identify fewer than K candidate beams having a predicted RSRP that is greater than a configured threshold, the UE may report the indices of those candidate beams.

A gNB may provide a value of "k" to the UE, e.g., via higher layer signaling, based on an indicated capability. For example, if a UE supports providing 10 best candidate beams, the gNB may configure less than 10. Upon an absence of the configuration of the value k from the gNB, a top-1 beam may be applied.

The beam q_{new}, which represents the selected candidate beam in a legacy specification, may still be applied with the understanding that it represent a new indicated candidate beam from set A, either explicitly or implicitly configured. For example, PDCCHs in all CORESETs of an Scell are monitored using QCL parameters associated with a predicated candidate beam. For a pathloss estimate, the predicted candidate beam corresponds to an RS index for calculating the pathloss, e.g., q_{d} = q_{new}.

According to an embodiment, a UE may indicate, to a gNB, e.g., via capability signaling, whether the UE supports enhanced beam failure recovery based on predicting candidates, rather than just attempting to find a candidate beam from a measured set of RSs.

Other capabilities of regular BM based on AI/ML, e.g., sizes of set A and set B, may be carried over for predicting beam candidate beam. Alternatively, the UE may indicate separate capabilities such as the supported sizes of set A and set B for candidate beam prediction for a BFR procedure.

In NR, when a cell is configured with multiple TRPs, each TRP may be associated with a dedicated lists of RSs for detecting beam failure and identifying candidate beams, i.e., (q_{0,0}, q_{1,0}) and (q_{1,0}, q_{1,1}).

According to an embodiment, the aforementioned methods may be extended such that two set Bs and the corresponding two set As are provided. That is a first pair of (set B, set A) is for the first TRP and second pair of (set B, set A) is for the second TRP. This may be beneficial as different antenna configuration patterns or power may be deployed.

According to an embodiment, a UE may re-interpret legacy candidate beams lists for two TRPs, e.g., *candidateBeamRS-List* and *candidateBeamRS-List2,* as RS IDs of the first set B for the first TRP and the second set B for the second TRP. Alternatively, a new higher layer parameter may be introduced for each TRP.

The UE may expect that RS IDs provided in a list of a candidate beam set B for each TRP to be used in the inference phase are the same as those used during a training phase. This may be beneficial as the UE can map the measured RS IDs in the list of the candidate beams in set B for each TRP to those used during the training phase.

To provide a gNB with more flexibility, RS IDs provided in a list of candidate beams in set B for each TRP to be used during the inference phase may differ from those used during a training phase. An association between RS IDs provided in a list of the candidate beams in set B to be used during the inference phase for each TRP and those used during the training phase may be utilized. A UE may expect the same transmission beam to be used for any associated pairs of RSs for each TRP. The UE may expect that associated pairs of RSs share common beam properties such as the same spatial domain filter, same 3dB beam width, angle departure, and/or angle of arrival, the same coverage area, or the same boresight direction. For example, the UE may assume that they (i.e., associated pairs of RSs) have the same QCL type A, B, C, or D.

An association between RS IDs provided in a list of candidate beams in set B for each TRP to be used during the inference phase and those used during the training phase may be based on various rules. For example, a rule may be in an ascending order of indices. Specifically, RS #i and RS #i+1 in the list of the candidate beams in set B for each TRP to be used during the inference phase may be associated with RS #j and RS #j+1, of the RSs in set B used during the training phase for each TRP, respectively. A UE may expect list of the candidate beams in set B to be used during the inference phase for each TRP and those used during the training phase to have the same cardinality, i.e., the same size. If their sizes are different, e.g., the size of the configured candidate beams in set B to be used during the inference phase for each TRP has fewer RSs than used during the training phase, then the association may still be based on an ascending order of RS IDs until all of the RSs in the list of the candidate beams in set B to be used during the inference phase for each TRP are associated with one of the RSs used in the training phase.

RS IDs provided in a list of candidate beams in set B to be used during the inference phase for each TRP can be directly associated with physical beam IDs used during the training phase, rather than using RS IDs used during the training. An association rule may similar to the aforementioned ones.

Additionally, a gNB may provide a UE with a candidate beams set A that is associated with a configured candidate beam set B for each TRP. For example, in a training phase, the UE is trained on multiple pairs of set A and set B for each TRP. For an inference phase, the gNB may provide the UE with a pairs index through a *single* higher layer signaling. This index may be similar to the associated ID used in AI/ML for beam management.

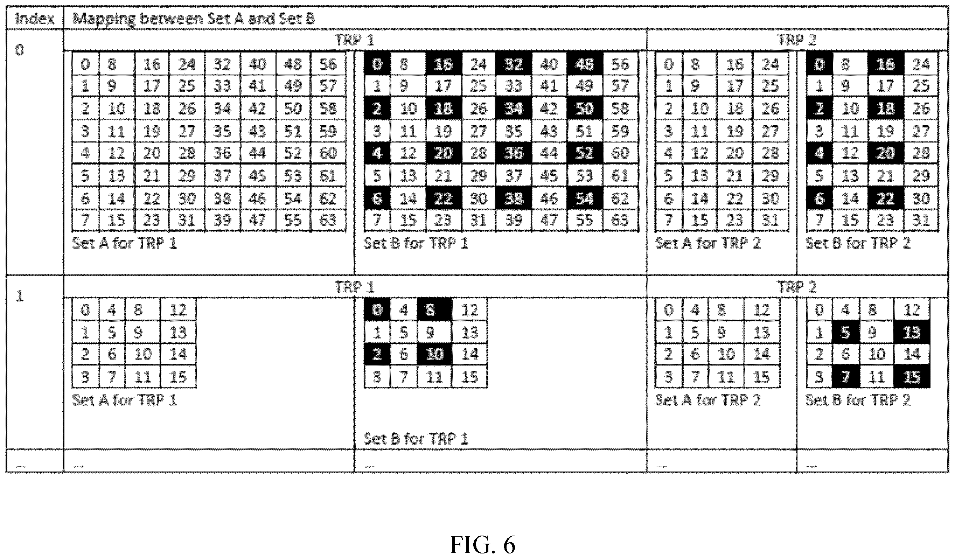

FIG. 6 illustrates a table having one-to-one mapping between Set A and Set B for each TRP, according to an embodiment. More specifically, FIG. 6 uses a single higher layer parameter to indicate pairs of associated set A and set B for each TRP.

Referring to FIG. 6, the boxes with black shading represent beams of set B. For example, if index 0 is indicated, for TRP 1, set A includes 64 beams and set B includes 16 beams. For TRP 2, set A includes 32 beams and set B includes 8 beams. However, if index 1 is indicated, for TRP 1, set A includes 16 beams and set B includes 4 beams. For TRP 2, set A includes 16 beams and set B includes 4 beams.

Alternatively, to provide a gNB with more flexibility, two separate higher layer parameters for each TRP may indicate pairs of an associated set A and set B. In this case, the table illustrated in FIG. 3 may be used.

The aforementioned methods for configuring or determining set A in case of a single TRP may be extended for cases of multiple TRPs. For example, separate higher layer parameters for each TRP, e.g., *NZP-CSI-RS-ResourceSet*, *CSI-SSB-ResourceSet*, etc., may provide RS IDs of set A. A UE may expect that RS IDs provided in a list of candidate beams in set A to be used during the inference phase for each TRP are the same as those used during the training phase.

Similar to NR, when beam failure occurs, the UE may transmit a MAC-CE indicating a preferred candidate beam, if one exists.
- If set A is explicitly configured, e.g., using the same or different RS IDs as used in training, a MAC-CE may include a configured RS ID of a preferred candidate beam if its predicted RSRP satisfies a configured threshold.
- If set A is implicitly configured, e.g., by indicating set B and a linked set A, a MAC-CE may include an RS ID used during a training phase or a physical beam ID of a preferred candidate beam, if its predicted RSRP satisfies a configured threshold.

The beam q_{new}, which represent the selected candidate beam in legacy specification, may still be applied with the understanding that it represent a new indicated candidate beam from set A, either explicitly or implicitly configured. For example, PDCCHs in CORESETs of a cell may be monitored using QCL parameters associated with a predicated candidate beam.

The aforementioned methods for identifying candidate beams based on explicit measurements and AI/ML model output can also be extended to multiple TRPs. Additionally, the aforementioned methods for indicating the k-best predicted candidate beam can also be extended to multiple TRPs.

A UE may indicate, to a gNB, via capability signaling, whether it supports predicting candidate beams when a cell is equipped with multiple TRPs. Other capabilities of BM based on AI/ML, e.g., sizes of set A and set B, may be carried over for predicting a candidate beam.

Alternatively, apart from BM, a UE may indicate separate capabilities for each TRP or for both TRPs including the sizes of set A and set B.

Even for such a case where a cell is equipped with multiple TRPs, a UE may indicate that it only supports predicting candidate beams for a single TRP. In this case, legacy beam failure recovery procedures may be applied for the other TRPs.

As described above, transmitting periodic RSs for detecting beam failure or identifying candidate beam may result in additional overhead. According to an embodiment, temporal beam prediction and spatial-domain beam prediction may be used to reduce signaling overhead.

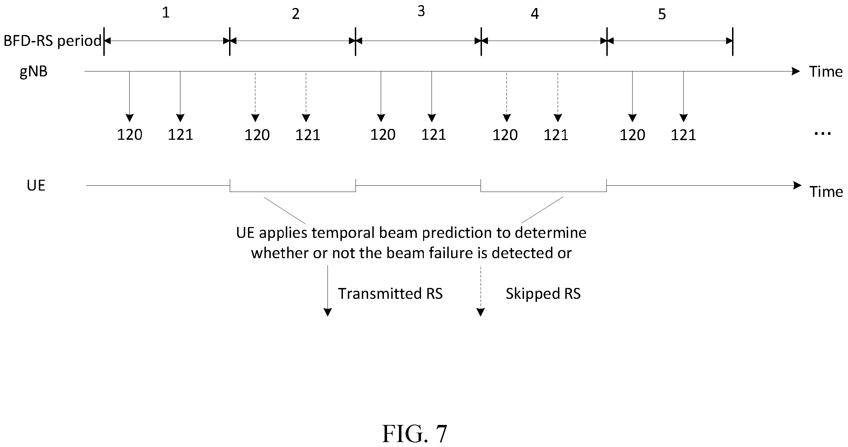

FIG. 7 illustrates a method of applying temporal beam prediction to predict beam failure, according to an embodiment. More specifically, FIG. 7 illustrates an example using two configured periodic RSs (#0 and #1) for BFD, which may be referred to as BFD-RSs.

Referring to FIG. 7, the BFD-RSs are transmitted in every other period. That is, the BFD-RSs are transmitted in periods 1, 3, and 5, and are skipped in periods 2 and 4. In this case, during periods 2 and 4, the UE may apply temporal beam prediction based on AI/ML to anticipate whether beam failure occur or not.

For determining set A and set B for temporal beam prediction, both set A and set B may be the same and include the BFD-RS. Set A and set B may be determined based on q₀, q_{0,0}, or q_{0,1}, where explicit or implicit approaches may be applied. The legacy approaches may be used to provide set A and set B explicitly via an RRC parameter indicating the RSs included in set A or B or implicitly based on TCI of monitored CORESETs according to legacy approaches.

A gNB may indicate to a UE in which periods a configured periodic RS will or will not be transmitted. For example, the indication may be carried via higher layer signaling. If the indication indicates half, then every other period will or will not be transmitted. If the indication indicates one-fifth, an RS may be transmitted once every five periods.

Alternatively, a gNB may indicate a time pattern corresponding to instances at which periodic BFD-RSs will be transmitted or skipped. For example, a time pattern similar to a DRX pattern may be applied. Specifically, the gNB may configure a periodicity, an offset, and a duration that repeats in every period. When a BFD-RS instance falls in the duration, the UE may assume it will or will not be transmitted.

The gNB may also indicate a start and a duration, e.g., using a start and length indicator value (SLIV) based method, for periods in which instances of BFD-RS are or are not transmitted.

Additionally, the gNB may indicate a periodicity for repeating such pattern. For example, the gNB may indicate a pattern within a period and that this pattern is repeated periodically.

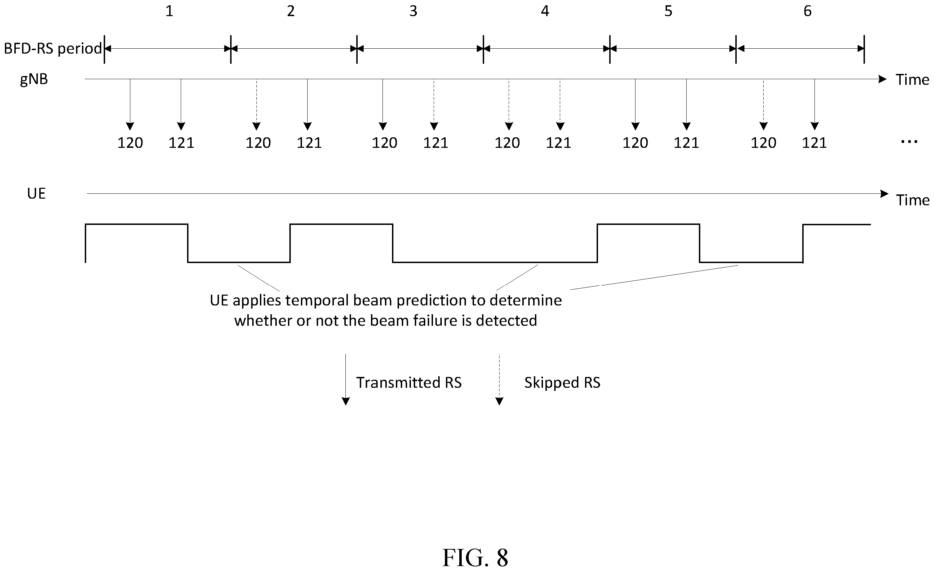

FIG. 8 illustrates a method of configuring a time pattern to indicate time instances of transmission or no transmission of BFD-RS, according to an embodiment.

Referring to FIG. 8, time resources at which BFD-RS instances are transmitted are provided by two SLIVs, i.e., SLIV #0 and SLIV #1. Additionally, a gNB indicates to a UE a period in which this pattern is repeated. For example, periodicity may be configured to be in absolute time, e.g., ms, in units of symbols, slots, UL-DL slot configuration, etc. Therefore, the UE may derive the BFD-RS instances that are and are not transmitted.

More specifically, by identifying the instances in which BFD-RSs are and are not transmitted based on the gNB indication, the UE may UE apply temporal beam prediction to determine whether or not beam failure is detected during the intervals in which BFD-RSs are not transmitted.

The aforementioned methods for determining whether instances of BFD-RSs may be applied for when temporal beam prediction is performed based on AI/ML may be applied for RSs linked to BM, CSI reporting, and candidate beam identification.

When a BFD-RS instance is not transmitted and temporal beam prediction is applied, a legacy comparison versus a threshold may be applied based on a predicted quality of the BFD-RS in order to determine whether beam failure occurs or not.

The aforementioned methods for configuring set A and set B and establishing an association between set A and set B may also be extended when temporal beam prediction is applied for single TRP operation or multiple TRP operation.

A same or similar approach may be applied for candidate beam identification. Specifically, some instances of periodic RSs for candidate beam identification may not be transmitted. In this case, a UE may apply temporal beam prediction to predict a candidate beam in instances in RSs for candidate beam identification are not transmitted.

For BFD-RS or RSs for candidate beam identification, spatial beam prediction may be applied on top of temporal beam prediction. Specifically, in instances in which RSs are not transmitted, a UE may predict set A that may differ from a measured Set B in a measurement window.

According to another embodiment, a BFD counter may be used to count failure instances inside prediction windows, which can reduce the periodicity of BFD-RSs and potentially predict a beam failure event in the future to improve reliability. In other words, a UE may not wait for a prediction window to occur. Instead, once an observation is finished, the UE may apply temporal beam prediction for certain window in the future to predict whether or not more BFIs will occur. If there are more failure instances, they are counted and a PHY layer may report BFIs (i.e., the measured ones and the predicted ones) to a MAC layer. The duration of the window may be provided using any of the aforementioned procedures.

The UE may indicate to the gNB, via capability signaling, whether it supports temporal beam prediction, and spatial beam prediction on top of BFD-RSs and/or RSs for candidate beam identification.

Additionally, the UE may indicate whether it support such features for single TRP operations mode or multiple TRP operations. Other capabilities of BM based on AI/ML, e.g., sizes of set A and set B, may also be carried over.

Alternatively, the UE may indicate separate capabilities for each TRP or for both TRPs including the sizes of set A and set B.

Even when a cell is equipped with multiple TRPs, a UE may indicate that it only supports predicting a candidate beam or a BFD-RS for a single TRP. In this case, legacy beam failure recovery procedures may be applied for the other TRPs.

In NR, BFD-RSs, e.g., q₀, q_{0,0}, or q_{0,1}, can be updated via higher layer signaling, e.g., an RRC reconfig, or a MAC-CE when multiple TRPs are deployed. This may be beneficial to alignment between RSs used for detecting beam failure and a currently used beam for receiving/transmitting different channels. To avoid frequent update of a BFD-RS, a UE may use spatial beam prediction and/or temporal beam prediction.

The aforementioned procedures may be used to provide a UE with set A(s) and linked set B(s) for single TRP operation or multiple TRP operation that may be treated as BFD-RSs. When the UE measures the RSs in the set B(s), the UE may predict a quality of the beams in the associated set A(s). With this type of approach, the UE may be able to assess the quality of all configured beams in the set A(s). Whether or not the UE may declare beam failure should depend on beams used for receiving DL channels or transmitting UL channel.

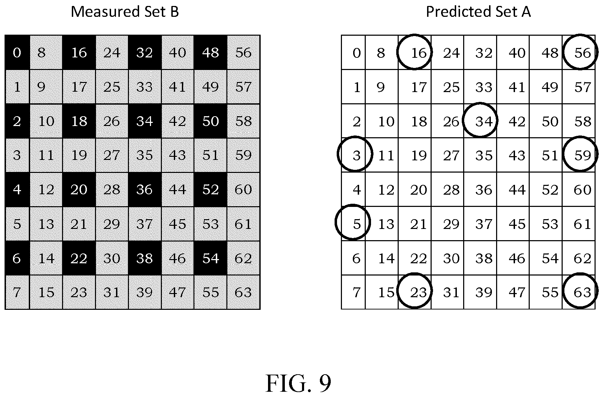

FIG. 9 illustrates a method of determining which beams in a set A can be used to declare beam failure, according to an embodiment.

Referring to FIG. 9, set B includes 16 beams to be measured and set A includes 64 beams to be predicted, excluding the measured ones. More specifically, in set B the beam indices with black shading represents the measured beams, and the beam indices with gray shading are not measured. In set A, the circled beams are the ones associated with beams used for receiving DL channels or transmitting UL channels. The qualify of all beams in set A are predicted.

A UE declares beam failure based on the quality of the beams being used for receiving DL channels or transmitting UL channels, which can be determined as follows:
- They may include all TCI states activated by a MAC-CE. Specifically, if a QCL source RS of an activated TCI state is associated with one of the beams in set A either explicitly or implicitly as described above, then the quality of beam is taken into consideration for declaring beam failure. For example, in FIG. 9, the 8 circles corresponds to 8 activated TCI states.
- Alternatively, a QCL source RS of TCI states of configured CORESETs may be used to determine which predicted beams contribute in evaluating an occurrence of a beam failure. For example, if there are three configured CORESETs and each one has a linked TCI state, then a UE uses the QCL source RS of each TCI state to determine the beams in set A that are associated with it, either explicitly or implicitly as described above.
- When unified TCI framework is deployed, activated TCI states via a MAC-CE may be used as described above to determine which beams in set A are used to declare beam failure. Additionally, the unified TCI framework indicated by scheduling or non-scheduling DCI may be used determine which beams in set A are used to declare beam failure.
   ∘ One option is that only beams in set A associated with a currently used indicated by the unified TCI framework are considered in evaluating beam failure.
   ∘ Another option is that, in addition to a currently used indicated by the unified TCI framework, TCI state for other channels that do not follow the unified TCI framework may be used to determine beams in set A to be used to declare beam failure.

With such approaches, a gNB may not need to configure RSs for identifying candidate beam. That is, when a UE predicts set A, the UE may obtain an idea of the quality of the possible candidate beams to replace a failed beam. When beam failure occurs, the UE may indicate one of the identified beam as descried above.

This approach may be beneficial as only one set of RSs is used for both detection of beam failure and identifying a candidate beam.

Additionally, this approach may be integrated with a normal BM procedure, e.g., BM Case-1/BM Case 2. That is, if a gNB configures a UE to apply BM Case-1/BM Case 2, the UE may assess an occurrence of beam failure and potential candidate beams. This may require set A for BM Case-1/BM Case 2 to at least include set A for BFD and candidate beam identification. When the UE detects a failure in serving beams as described herein, the UE may trigger a BFR procedure. The gNB may indicate to the UE whether the provided configurations BM Case-1/BM Case 2 can be used for the BFR procedure or not. For example, higher layer signaling, such an RRC parameter, can be used as a flag for this purpose. When this flag is absent, the UE may not use the configurations of BM Case-1/BM Case 2 for BFD and candidate beam identification.

A metric for detecting beam failure and identifying a candidate beam may differ from an AI/ML model for BM output, e.g., predicting best K beams in set A or predicting RSRP. Therefore, separate training may be performed, even if the same set A or B is used for BM Case-1/BM Case-2 and a beam failure procedure.

In case of multiple TRP operations, a determination of which beams out of those predicted beams in set A are to be used to determine whether or not beam failure is declared may be similar to the aforementioned method, but it may be performed with respect to each TRP.
- They may include all TCI states activated by a MAC-CE for a TRP, e.g., identified by CORESETPoolIndex. If a QCL source RS of an activated TCI state is associated with a beam in set A of the TRP, either explicitly or implicitly as described above, then quality of a beam is taken into consideration for declaring beam failure for the TRP.
- Alternatively, a QCL source RS of TCI states of configured CORESETs linked to a particular TRP, e.g., configured with *coresetPoolIndex,* may determine which predicted beams contribute in evaluating an occurrence of beam failure. For example, if there are three configured CORESETs associated with TRP 1, e.g., configured with coresetPoolIndex 0, each CORESET has a linked TCI state, and a UE uses the QCL source RS of each TCI state to determine beams in set A linked to TRP1 that are associated with it, either explicitly or implicitly as described above. If there are two other CORESETs associated with TRP 2, e.g., configured with coresetPoolIndex 1, each one has a linked TCI state, and a UE may use a QCL source RS of each TCI state to determine beams in set A linked to TRP 2 that are associated with it, either explicitly or implicitly as described above.
- When unified TCI framework is deployed and if a UE is indicated a first *TCI-State* and a second TCI-State or coresetPoolIndex values for some CORESETs, a activated TCI states, via a MAC-CE, may be used as described above to determine which beams in set A of which TRP are used to declare beam failure. Additionally, a unified TCI indicated by scheduling or non-scheduling DCI may be used to determine which beams in Set A of which TRP are used to declare beam failure.
   ∘ One option is that only beams in set A associated with a currently used unified TCI framework, for each TRP, are considered in evaluating beam failure.
   ∘ As another option, in addition to a current used unified TCI state, TCI for other channels that do not follow a unified TCI framework may be used to determine beams in set A for each TRP to be used to declare beam failure or not.

Although the above-described methods are described with a focus on AI/ML spatial domain beam prediction, temporal domain prediction may be used as well. The aforementioned procedures may be used to determine instances for RS transmission.

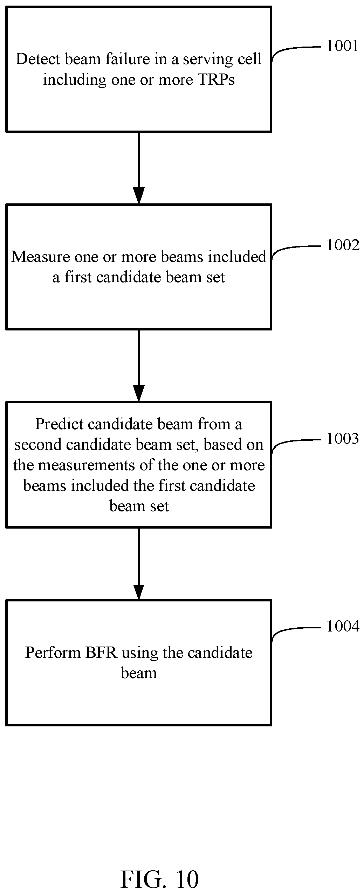

FIG. 10 is a flowchart illustrating a method performed by a UE, according to an embodiment. More specifically, FIG. 10 illustrates a UE method of performing BFR.

Referring to FIG. 10, in step 1001, the UE detects beam failure of a beam used by the UE in a serving cell including one or more TRPs.

In step 1002, the UE measures one or more beams included a first candidate beam set, e.g., candidate set B.

In step 1003, the UE predicts, based on an AI/ML model, a candidate beam from a second candidate beam set, e.g., candidate set A, based on the measurements of the one or more beams included the first candidate beam set.

In step 1004, the UE performs BFR using the candidate beam.

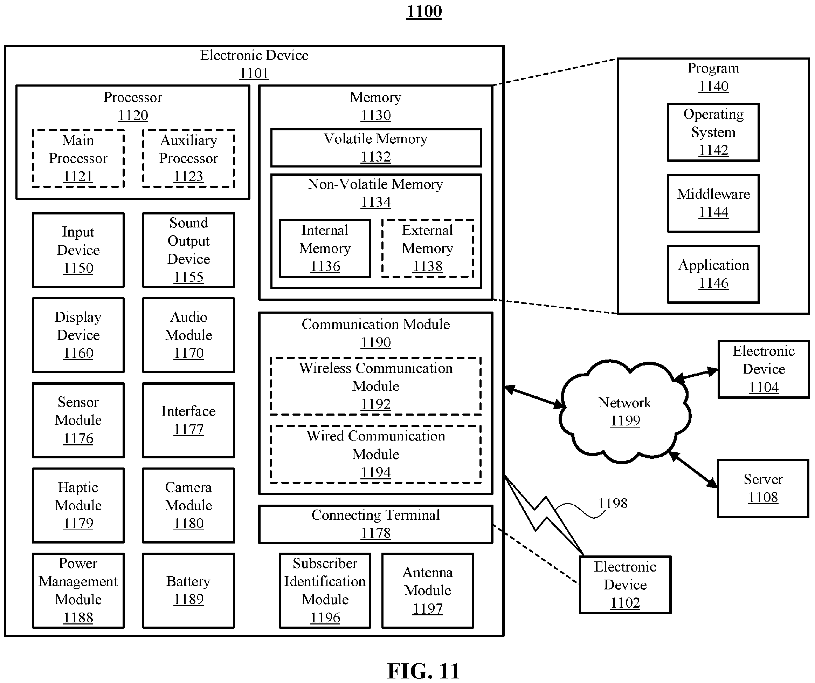

FIG. 11 is a block diagram of an electronic device in a network environment 1000, according to an embodiment.

Referring to FIG. 11, an electronic device 1101 in a network environment 1100 may communicate with an electronic device 1102 via a first network 1198 (e.g., a short-range wireless communication network), or an electronic device 1104 or a server 1108 via a second network 1199 (e.g., a long-range wireless communication network). The electronic device 1101 may communicate with the electronic device 1104 via the server 1108. The electronic device 1101 may include a processor 1120, a memory 1130, an input device 1150, a sound output device 1155, a display device 1160, an audio module 1170, a sensor module 1176, an interface 1177, a haptic module 1179, a camera module 1180, a power management module 1188, a battery 1189, a communication module 1190, a subscriber identification module (SIM) card 1196, or an antenna module 1197. In one embodiment, at least one (e.g., the display device 1160 or the camera module 1180) of the components may be omitted from the electronic device 1101, or one or more other components may be added to the electronic device 1101. Some of the components may be implemented as a single integrated circuit (IC). For example, the sensor module 1176 (e.g., a fingerprint sensor, an iris sensor, or an illuminance sensor) may be embedded in the display device 1160 (e.g., a display).

The processor 1120 may execute software (e.g., a program 1140) to control at least one other component (e.g., a hardware or a software component) of the electronic device 1101 coupled with the processor 1120 and may perform various data processing or computations e.g., the method illustrated in FIG. 4.

As at least part of the data processing or computations, the processor 1120 may load a command or data received from another component (e.g., the sensor module 1176 or the communication module 1190) in volatile memory 1132, process the command or the data stored in the volatile memory 1132, and store resulting data in non-volatile memory 1134. The processor 1120 may include a main processor 1121 (e.g., a central processing unit (CPU) or an application processor (AP)), and an auxiliary processor 1123 (e.g., a graphics processing unit (GPU), an image signal processor (ISP), a sensor hub processor, or a communication processor (CP)) that is operable independently from, or in conjunction with, the main processor 1121. Additionally or alternatively, the auxiliary processor 1123 may be adapted to consume less power than the main processor 1121, or execute a particular function. The auxiliary processor 1123 may be implemented as being separate from, or a part of, the main processor 1121.

The auxiliary processor 1123 may control at least some of the functions or states related to at least one component (e.g., the display device 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). The auxiliary processor 1123 (e.g., an image signal processor or a communication processor) may be implemented as part of another component (e.g., the camera module 1180 or the communication module 1190) functionally related to the auxiliary processor 1123.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134. Non-volatile memory 1134 may include internal memory 1136 and/or external memory 1138.

The program 1140 may be stored in the memory 1130 as software, and may include, for example, an operating system (OS) 1142, middleware 1144, or an application 1146.

The input device 1150 may receive a command or data to be used by another component (e.g., the processor 1120) of the electronic device 1101, from the outside (e.g., a user) of the electronic device 1101. The input device 1150 may include, for example, a microphone, a mouse, or a keyboard.

The sound output device 1155 may output sound signals to the outside of the electronic device 1101. The sound output device 1155 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1160 may visually provide information to the outside (e.g., a user) of the electronic device 1101. The display device 1160 may include, for example, a display, a hologram device, or a projector and control circuitry to control a corresponding one of the display, hologram device, and projector. The display device 1160 may include touch circuitry adapted to detect a touch, or sensor circuitry (e.g., a pressure sensor) adapted to measure the intensity of force incurred by the touch.

The audio module 1170 may convert a sound into an electrical signal and vice versa. The audio module 1170 may obtain the sound via the input device 1150 or output the sound via the sound output device 1155 or a headphone of an external electronic device 1102 directly (e.g., wired) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. The sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device 1102 directly (e.g., wired) or wirelessly. The interface 1177 may include, for example, a high- definition multimedia interface (HDMI), a universal serial bus (USB) interface, a secure digital (SD) card interface, or an audio interface.

A connecting terminal 1178 may include a connector via which the electronic device 1101 may be physically connected with the external electronic device 1102. The connecting terminal 1178 may include, for example, an HDMI connector, a USB connector, an SD card connector, or an audio connector (e.g., a headphone connector).

The haptic module 1179 may convert an electrical signal into a mechanical stimulus (e.g., a vibration or a movement) or an electrical stimulus which may be recognized by a user via tactile sensation or kinesthetic sensation. The haptic module 1179 may include, for example, a motor, a piezoelectric element, or an electrical stimulator.

The camera module 1180 may capture a still image or moving images. The camera module 1180 may include one or more lenses, image sensors, image signal processors, or flashes. The power management module 1188 may manage power supplied to the electronic device 1101. The power management module 1188 may be implemented as at least part of, for example, a power management integrated circuit (PMIC).

The battery 1189 may supply power to at least one component of the electronic device 1101. The battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the AP) and supports a direct (e.g., wired) communication or a wireless communication. The communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as BLUETOOTH^{™}, wireless-fidelity (Wi-Fi) direct, or a standard of the Infrared Data Association (IrDA)) or the second network 1199 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The antenna module 1197 may transmit or receive a signal or power to or from the outside (e.g., the external electronic device) of the electronic device 1101. The antenna module 1197 may include one or more antennas, and, therefrom, at least one antenna appropriate for a communication scheme used in the communication network, such as the first network 1198 or the second network 1199, may be selected, for example, by the communication module 1190 (e.g., the wireless communication module 1192). The signal or the power may then be transmitted or received between the communication module 1190 and the external electronic device via the selected at least one antenna.

Commands or data may be transmitted or received between the electronic device 1101 and the external electronic device 1104 via the server 1108 coupled with the second network 1199. Each of the electronic devices 1102 and 1104 may be a device of a same type as, or a different type, from the electronic device 1101. All or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1101. The electronic device 1101 may provide the outcome, with or without further processing of the outcome, as at least part of a reply to the request. To that end, a cloud computing, distributed computing, or client-server computing technology may be used, for example.

FIG. 11 shows a system including a UE 1205 and a gNB 1210, in communication with each other. The UE may include a radio 1215 and a processing circuit (or a means for processing) 1220, which may perform various methods disclosed herein, e.g., the method illustrated in FIG. 4. For example, the processing circuit 1220 may receive, via the radio 1215, transmissions from the network node (gNB) 1210, and the processing circuit 1220 may transmit, via the radio 1215, signals to the gNB 1210.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. **In** certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. **In** some cases, the actions set forth in the claims may be performed in a different order and still achieve desirable results. Additionally, the processes depicted in the accompanying figures do not necessarily require the particular order shown, or sequential order, to achieve desirable results. **In** certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method of performing beam failure recovery, BFR, by a user equipment, UE, the method comprising:
detecting beam failure of a beam used by the UE in a serving cell including one or more transmission and reception points, TRPs;
measuring one or more beams included a first candidate beam set;
predicting a candidate beam from a second candidate beam set, based on the measurements of the one or more beams included the first candidate beam set; and
performing BFR using the candidate beam.

2. The method of claim 1, further comprising:
performing a first transmission, to a base station, indicating the candidate beam from the second candidate beam set; and
receiving, from the base station, a response acknowledging the candidate beam from the second candidate beam set.

3. The method of claim 2, wherein the transmission indicating the candidate beam from the second candidate beam set includes a physical random access channel, PRACH, associated with the candidate beam from the second candidate beam set.

4. The method of claim 2 or 3, wherein the response acknowledging the candidate beam from the second candidate beam set includes one of a physical downlink control channel, PDCCH, or a physical downlink shared channel, PDSCH, using same quasi col-location, QCL, parameters corresponding to the candidate beam from the second candidate beam set.

5. The method of claim 1, wherein predicting the candidate beam from the second candidate beam set comprises:
predicting multiple best candidate beams, based on the measurements of the one or more beams included the first candidate beam set;
performing a transmission, to a base station, for each of the multiple best candidate beams; and
receiving a response, from the base station, indicating the candidate beam from the multiple best candidate beams.

6. The method of claim 5, wherein receiving the response comprises:
dividing a monitoring window into a number of portions corresponding to a number of the multiple best candidate beams; and
receiving the response corresponding to the candidate beam from the multiple best candidate beams in a corresponding portion of the divided monitoring window.

7. The method of any one of claims 1 to 6, further comprising receiving, from a base station, at least one of a first configuration of the first candidate beam set or a second configuration of the second candidate beam set.

8. The method of any one of claims 1 to 7, further comprising receiving, from a base station, one more configurations for associating the first candidate beam set and the second candidate beam set.

9. The method of any one of claims 1 to 8, further comprising predicting beam quality on occasions in which candidate beams from the second candidate beam set are not transmitted,
wherein the base station does not transmit beams of the first candidate beam set on the occasions in which the candidate beams are not transmitted.

10. The method of claim 9, further comprising receiving an indication, from the base station, indicating the occasions in which the candidate beams are not transmitted.

11. The method of any one of claims 1 to 10, wherein predicting the candidate beam from the second candidate beam set is further based on an artificial intelligence, AI/machine learning, ML, model.

12. A user equipment, UE, comprising:
a transceiver; and
a processor configured to:
detect beam failure of a beam used by the UE in a serving cell including one or more transmission and reception points, TRPs,
measure one or more beams included a first candidate beam set,
predict a candidate beam from a second candidate beam set, based on the measurements of the one or more beams included the first candidate beam set, and
perform beam failure recovery, BFR, using the candidate beam.

13. The UE of claim 12, wherein the processor is further configured to:
perform a first transmission, via the transceiver, to a base station, indicating the candidate beam from the second candidate beam set, and
receive, via the transceiver, from the base station, a response acknowledging the candidate beam from the second candidate beam set.

14. The UE of claim 13, wherein the transmission indicating the candidate beam from the second candidate beam set includes a physical random access channel, PRACH, associated with the candidate beam from the second candidate beam set.

15. The UE of claim 13 or 14, wherein the response acknowledging the candidate beam from the second candidate beam set includes one of a physical downlink control channel, PDCCH, or a physical downlink shared channel, PDSCH, using same quasi col-location, QCL, parameters corresponding to the candidate beam from the second candidate beam set.
